# EUROPEAN PATENT APPLICATION

(11) **EP 2 287 127 A2**
(43) Date of publication of application: **23.02.2011**
(21) Application number: 10169748.0
(22) Date of filing: 15.07.2010
(51) Int. Cl.: C04B 26/16, C04B 26/18, C04B 26/02, C04B 30/00

(54) **Polymer padding**

(30) Priority: 20.07.2009 ES 200930290 U
(71) Applicant: Areniscas de Los Pinares Burgos Soria, S.L., C/ Valdemoro nº 1 Bajo 09001 Burgos (ES)
(72) Inventor: Conde Vázquez, Cristina, 09001 Burgos (ES); De Miguel San Martín, Olivia, 09001 Burgos (ES); Gil García, Rubén, 09001 Burgos (ES)
(74) Representative: Pons Ariño, Angel

(57) **Abstract**

The main object of the invention is a polymer padding for forming a continuous pavement which is stable against compression and shearing, in addition to being permeable to the passage of gases and liquids.

## Description

### OBJECT OF THE INVENTION

The main object of the invention is a polymer padding for forming a continuous pavement which is stable against compression and shearing, in addition to being permeable to the passage of gases and liquids.

### BACKGROUND OF THE INVENTION

Multiple types of continuous pavements are currently known to exist. For example, the patents *"New process for in situ manufacturing of continuous paving",* published under number P2142711, and its certificate of addition *"Improvements introduced in patent of invention number 9700040, relative to a new process for in situ manufacturing of continuous pavement",* published under number P2155377, disclose a pavement wherein aggregates and adhesives are used, although for the purpose of creating a compact and impermeable pavement that can be polished and also requires a previously stabilised surface.

Other draining pavements for specific use in tree pits are known to exist, such as for example utility models U9802207 and U9801219, and patent P200100945. In all of these patents, the pavement is based on overlapping two layers formed from particles where the granulometry of the lower layer is always coarser than the granulometry of the upper layer. However, in practice these pavements give rise to poor seating of the rigid upper layer, due to the fact that the stress to which the pavement is subjected is absorbed by the gravel layer, which invests the energy in its realignment, leaving spaces in the interface of both layers; this gives rise to flexion stress and, consequently, cracks, fissures, crevices, uplift, etc. in the upper layer.

### DESCRIPTION OF THE INVENTION

The polymer padding of the present invention solves these problems on applying overlapping layers on a compact base that is fully adaptable to terrain morphology, thus allowing the upper layers to become properly seated and absorb the stress exerted thereon. It must be pointed out that the polymer padding, due to its structure, has a higher liquid filtration speed than the aforementioned systems, being a better draining pavement for uses that require high fluid flows.

The polymer padding of the invention is basically formed by two layers:
a) A base layer
   The base layer is disposed on the terrain to be treated and is formed from silicic or siliciclastic aggregate having a granulometry comprised between clay and very coarse sand, according to the granulometric classification of sedimentary rocks proposed by J.A. Udden and C.K. Wentworth. Larger granulometries than very coarse sand may be used in this layer, provided that the spaces left by these are filled with materials of finer granulometries, so that the final result is a compact and filtering layer. The nature of the aggregates used may be different, but the final compaction thereof must result in a stable, compact and filtering layer.
   This layer is compacted and levelled to ensure perfect seating thereof and of the upper layers on the terrain morphology. Additionally, in order to avoid leaching of the fine-grained material of this layer, in accordance with a particular embodiment, it is mineralised by means of a consolidant.
b) A second layer (C₁)
   A second layer disposed on the base layer is formed from a mixture of aggregates embedded in a thermostable resin. The aggregate/resin ratio, as a percentage of resin, ranges between 5% and 12%, depending on the absorption of the aggregate used. The granulometry of the aggregates, preferably sandstone, is comprised between coarse sand and pebble, according to the granulometric classification of sedimentary rocks proposed by J.A. Udden and C.K. Wentworth. On the other hand, the thermostable resin is preferably selected from among the following list: saturated or unsaturated polyester resins, epoxies, phenolics, polyurethanes and vinyl ethers. The resin may be protected by adding different additives against aging due to solar radiation and/or to favour polymerisation thereof by humidity contact. Finally, this second layer is compacted and levelled to ensure perfect seating thereof and of the upper layer.
   In accordance with a preferred embodiment of the invention, a third decorative or technical layer is disposed, also compacted and levelled, which is formed from a mixture with identical characteristics to those of the second layer, where the resin and aggregates may also be pigmented to obtain different colours, drawings or designs. Additionally, this layer may comprise decorative components such as materials of different sizes and geometries of natural or artificial stone, polymer concrete, glass, ceramic (for example, cubes made of natural sandstone, limestone, dolomite, marble, granite, quartzite, slate, etc.), in addition to functional elements such as luminaries: lamps, LEDs and optical fibre, in addition to housing electricity and water connections by means of hidden or exposed wiring or piping. It may also incorporate animal-repelling products in the system.

### DESCRIPTION OF THE DRAWINGS

In order to complement this description and with the object of helping to better understand the characteristics of the invention, according to a preferred example of practical embodiment thereof, a set of drawings has been included as an integral part of said description, wherein the following have been represented in an illustrative and non-limiting manner:

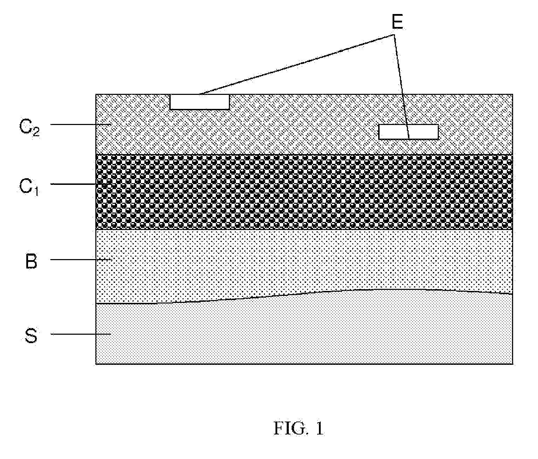

Figure 1 shows a sectional view of the polymer padding, in accordance with a particular embodiment of the invention.

### PREFERRED EMBODIMENT OF THE INVENTION

An example of polymer padding in accordance with the present invention is described below. Figure 1 shows a specific example of polymer padding: firstly, the 3 cm thick base layer (B) of siliciclastic aggregate having a granulometry between clay and very coarse sand is applied to the terrain (S), levelled and compacted. Next, the 4 cm thick second layer (C₁) is formed using sandstone aggregates having a granulometry comprised between coarse sand and pebble, mixed with 8% of thermostable enhanced polyester resin, which is compacted and levelled to apply the second layer (C₁) of polymer padding. Next, a 3 cm thick layer (C₂) of pre-dyed sandstone aggregate mixed with 8% of thermostable enhanced polyester resin is poured, which is compacted and levelled. Functional elements (E) may be disposed while pouring this last layer (C₂).

The polymer padding, due to its stability, fluid permeability and transitability characteristics, is especially suitable for use on slopes, hillsides, banks, in gardens, park areas with drainage requirements, roundabouts, medians, walks, flower beds, tree pits, shower bases, swimming pool or fountain drainage swales, urinaries for pets and any other use that requires any of its characteristics, even just decorative.

It also offers the advantage of not requiring previous improvement of the land or surface area to be covered. It is rapidly executed (easily executed by labourers) and has low maintenance costs. The system may be executed in situ, whereupon its industrialisation for manufacturing prefabricated units is highly feasible, the shapes and dimensions of which would be adapted to the intended use, the base layer (B) being the only layer executed in situ.

## Claims

1. A polymer padding for the formation of a continuous permeable pavement on a terrain (S), **characterised in that** it comprises the following layers:
a base layer (B) formed from silicic or siliciclastic aggregate having a granulometry comprised between clay and very coarse sand, according to the classification proposed by J.A. Udden and C.K. Wentworth; and
a second layer (C₁) formed from a mixture of aggregates having a granulometry between coarse sand and pebble, according to the classification of J.A. Udden and C.K. Wentworth, embedded in a thermostable resin.

2. The polymer padding, according to claim 1, where the base layer (B) also comprises a consolidant for mineralizing the finest aggregates.

3. The polymer padding, according to any of the preceding claims, where the second layer (C₁) comprises between 5% and 12% of thermostable resin.

4. The polymer padding, according to any of the preceding claims, where the aggregates of the second layer (C₁) comprise sandstone.

5. The polymer padding, according to any of the preceding claims, where the thermostable resin of the second layer (C₁) is selected from among the following list: saturated or unsaturated polyester resin, epoxy, phenolic resin, polyurethane and vinyl ether.

6. The polymer padding, according to any of the preceding claims, which also comprises a decorative third layer (C₂) formed from a mixture of aggregates embedded in resin identical to that of the second layer (C₁), where the thermostable resin or aggregates are also pigmented.

7. The polymer padding, according to claim 6, where the third layer (C₂) also comprises functional elements (E).
